# EUROPEAN PATENT SPECIFICATION

(11) **EP 3 717 222 B1**
(45) Date of publication and mention of the grant of the patent: **05.01.2022**
(21) Application number: 18865344.8
(22) Date of filing: 27.11.2018
(51) Int. Cl.: B29D 30/06, B29C 73/22

(54) **PROCESS FOR MANUFACTURING SELF-SEALING TYRES**
VERFAHREN ZUR HERSTELLUNG VON SELBSVERSIEGELNDEN REIFEN
PROCÉDÉ POUR CONSTRUIRE DES PNEUMATIQUES AUTO-OBTURATEURS

(30) Priority: 30.11.2017 IT 201700137939
(43) Date of publication of application: 07.10.2020
(73) Proprietor: Pirelli Tyre S.p.A., 20126 Milano (IT)
(72) Inventor: DE COL, Christian, 20126 Milano (IT); BOFFA, Vincenzo, 20126 Milano (IT); CONTI, Davide Lupo, 20126 Milano (IT)
(74) Representative: Vittorangeli, Lucia
(86) International application number: PCT/IB2018/059351
(87) International publication number: WO 2019/106533

(56) References cited:
- EP-A2- 0 189 303
- WO-A1-2005/097479
- LU-A1- 68 168
- US-A- 3 607 558
- US-A- 5 116 449
- US-A1- 2009 205 765

## Description

The object of the present invention is a process for manufacturing self-sealing tyres.

Self-sealing tyres are puncture-resistant tyres since they contain a self-sealing layer applied to the radially inner surface of the tyre, which automatically seals a possible puncture.

The production cycles of a tyre provide for making and/or assembling the various components of a tyre, obtaining a green tyre and subsequently subjecting the green tyre to a process of moulding and vulcanisation adapted to define the structure of the tyre according to a desired tread pattern and geometry.

With "self-sealing sleeve" it is intended an assembled semi-finished product having substantially cylindrical shape intended to make a self-sealing assembly inside a tyre.

With "substantially cylindrical shape" both of the self-sealing sleeve and of the support, in particular of the drum, which carries it, it is intended both a cylindrical shape having rectilinear generatrix and a slightly convex shape having convex generatrix.

With the generic term "tyre", when not further specified, it is indicated: a green tyre being processed comprising at least one carcass structure, having at least one toroidally-shaped carcass ply with its axially opposite end flaps associated with respective bead cores and forming a pair of beads; a green tyre; and a moulded and vulcanised tyre.

With "green tyre" it is indicated a tyre at the end of the building process, not yet subjected to a process of moulding and vulcanisation.

With "vulcanised tyre" or "moulded and vulcanised tyre" it is indicated a green tyre that has been subjected to a process of moulding and vulcanisation.

In the case of the tyre (or of a portion thereof), the terms "radial" and "axial" and the expressions "radially inner/outer" and "axially inner/outer" are used by referring to the radial/axial direction of the tyre itself (or of a portion thereof), i.e. to a direction perpendicular/parallel to the rotation axis of the tyre.

In the case of the self-sealing sleeve or of a support thereof, the terms "radial" and "axial" and the expressions "radially inner/outer" and "axially inner/outer" are used by referring to the radial/axial direction of the self-sealing sleeve or of a support thereof, in particular of a drum, i.e. to a direction perpendicular/parallel to the longitudinal axis of the self-sealing sleeve or of the support/drum.

In the case of the tyre, the terms "circumferential" and "circumferentially" are used by referring to the annular extension of the tyre (or of a portion thereof) around its rotation axis. In the case of the self-sealing sleeve or of its support, the terms "circumferential" and "circumferentially" are used by referring to the annular extension of the self-sealing sleeve or of its support, in particular of the drum, around the longitudinal axis thereof.

With "coaxial position" of the self-sealing sleeve with respect to the tyre it is intended a relative position in which the rotation axis of the tyre substantially coincides with the longitudinal axis of the self-sealing sleeve. Hence, when the self-sealing sleeve is arranged coaxial with the tyre and subsequently coupled thereto to form a self-sealing assembly, the longitudinal axis of the self-sealing sleeve and possibly of the support/drum substantially coincides with the rotation axis of the tyre and the aforesaid terms can indiscriminately refer to one axis or the other.

With "longitudinal dimension" of the self-sealing sleeve it is intended a dimension parallel to its longitudinal axis delimited by circumferential end edges of the self-sealing sleeve itself.

With "crown portion" of the tyre it is intended a portion of the tyre arranged substantially perpendicular to an axial middle line plane thereof, in radially outer position, and corresponding at least to portions of the carcass structure.

With "annular anchoring portions" of the tyre, also commonly defined "beads", the radially inner zones of the tyre are intended, respectively arranged on opposite sides of said axial middle line plane, configured so as to be engaged with a mounting rim. In particular with "annular anchoring portion" it is intended at least one component of the tyre that comprises at least one bead core and also preferably a filler insert in radially outer position with respect thereto.

With "side portions" of the tyre, portions of the tyre are intended which extend respectively from axially opposite sides of said axial middle line plane between each of the annular anchoring portions and the crown portion, corresponding at least to portions of the carcass structure arranged, at the end of the building, in an axially inner position with respect to the sidewalls of a green tyre or of a moulded and vulcanised tyre.

With "circumferential perimeter" of the self-sealing sleeve it is intended a circumferential dimension of a transverse section of the self-sealing sleeve itself, e.g. a radially inner circumference or a radially outer circumference or an intermediate circumference.

With "first/second annular portion" of the self-sealing sleeve, it is intended a substantially annular portion having axial length smaller than the axial length of the self-sealing sleeve. Each annular portion can be a continuous loop or a circumferential sequence of sectors defined for example by circumferential sectors of a drum supporting the self-sealing sleeve.

With "self-sealing material" it is intended a polymer material provided, after the vulcanisation of the tyre, with viscoelastic and tackiness characteristics such to allow the material to flow within a perforation caused by a pointed element and adhere to and be driven by said moving pointed element. Such polymer material can for example comprise a synthetic or natural elastomer, a elastomer block copolymer, process oil, at least one adhesive agent, and at least one reinforcement filler.

EP 0189303 A discloses a self-sealing pneumatic tire that has an inner surface provided with a layer of sealant and a plurality of edge strips that partially overlap the sealant layer to retain the sealant in position during construction and operation of the tire. Construction is simplified by utilizing a laminate structure incorporating such edge strips and also comprising an air impermeable elastomer strip, the center of which is coated with the layer of puncture sealant material and has the edge strips adhesively attached to the elastomer strip and partially overlapping the edges of the sealant layer. Also disclosed is a method of constructing this tire by attaching a tire body or carcass to this laminate structure prior to molding and curing the tire. During the molding process, the edge strips that partially overlap the sealant layer hold the sealant in place preventing it from flowing in an uncontrolled manner.

The document US2009/0205765 describes a method for making a self-sealing tyre in which it is provided to arrange a vulcanised tyre and make a seal band by extruding self-sealing material on a lamina. The seal band is wound as a spiral in order to be introduced in the vulcanised tyre.

The document EP3009260 describes a self-sealing tyre comprising a sealing layer, obtained through coiling a sealing material directly on the radially inner surface of the vulcanised tyre rotated around the axis thereof. In particular the vulcanised tyre is mounted on a rotary drive device while a nozzle mounted on the tip of an extruder is inserted in the tyre. The sealing material is extruded from the extruder and deposited on the surface of the tyre by means of the nozzle.

The document WO2011/064698 regards a method for selectively controlling the self-sealing capacity of a tyre obtained via affixing, on a drum, a sealing assembly and subsequent formation thereon of a green tyre precursor including liner and carcass and subsequent shaping, moulding and vulcanisation.

The Applicant has verified that current production needs require a high level of flexibility in every step of the process and that even only limiting the application of the sealing layer to a step after the vulcanisation would limit the possibilities of adapting the building process and the layout of the building plant to the single production requirements.

The Applicant has perceived the importance of freeing, as much as possible, the step of application of the sealing layer from the specific building process in order to increase the flexibility of the building process and/or of the building plant and simultaneously be able to operate on any type of green or vulcanised tyre, and in the end be able to arrange a self-sealing tyre that is structurally and aesthetically improved.

The Applicant has finally found that by making a self-sealing sleeve in a manner completely independent of the type of tyre building process and plant, it is possible to effectively apply such sleeve to any type of tyre - green being processed, green or moulded and vulcanised - obtained by means of any building process operating a radial expansion of the sleeve within the tyre until it is adhered inside the tyre itself.

More precisely, the invention regards a process for manufacturing self-sealing tyres.

Preferably, action a) is provided for arranging a tyre comprising a crown portion arranged circumferentially around a rotation axis of the tyre and two side portions which extend respectively from axially opposite sides of the crown portion, each side portion ending in an annular anchoring portion and having a radially inner crown surface.

Preferably, action b) is provided for arranging a self-sealing sleeve having cylindrical shape around a longitudinal axis thereof and having diameter smaller than the diameter of the annular anchoring portions of the tyre.

Preferably, the self-sealing sleeve is extended along said longitudinal axis between two circumferential end edges, delimiting a longitudinal dimension of said self-sealing sleeve.

Preferably, action c) is provided for introducing the self-sealing sleeve into the tyre up to arranging it in a position coaxial with the crown portion and radially within it.

Preferably, action d) is provided for radially expanding said self-sealing sleeve within the tyre up to adhering to the radially inner crown surface in an expanded configuration of the self-sealing sleeve.

The Applicant deems that such process solves the abovementioned problems due to the fact that a self-sealing sleeve provided in a manner completely independent of the type of tyre building process and plant is radially expanded within the tyre up to complete adhesion. In particular the radial and hence symmetric expansion around the longitudinal axis allows operating on any tyre type, even green, notwithstanding the specific handling difficulties. In addition, by arranging and/or making the self-sealing sleeve in an independent manner, it is possible to make it by optimising its adhesiveness and sealing characteristics and possibly by providing components which preserve the integrity and aesthetics thereof, such as radially inner protective films.

The present invention can have at least one of the following preferred characteristics.

Preferably in action b) the self-sealing sleeve has a first circumferential perimeter and, after action d), the self-sealing sleeve that has reached the expanded configuration has a second circumferential perimeter greater than the first circumferential perimeter.

The arrangement of a self-sealing sleeve of cylindrical shape with substantially circular perimeter which is increased following the radial expansion of the self-sealing sleeve itself simplifies the application thereof, ensuring the perfect adhesion both on green tyres and vulcanised tyres.

Preferably action d) comprises a first sub-action d1) comprising partially expanding the self-sealing sleeve up to reaching an intermediate configuration in which the self-sealing sleeve partially adheres to the radially inner crown surface.

Preferably action d) comprises, following the first sub-action d1), a second sub-action d2) comprising completing the radial expansion of the self-sealing sleeve up to reaching said expanded configuration.

The radial expansion divided into at least two separate moments allows obtaining a high precision in the relative positioning between the self-sealing sleeve and the tyre with the first sub-action and optimising the adhesion, e.g. allowing the operation so as to eliminate possible air bubbles and/or prevent bending, with the second sub-action.

Preferably the first sub-action d1) is carried out at at least one first annular portion of the self-sealing sleeve up to reaching said intermediate configuration in which said first annular portion adheres to the radially inner crown surface of the tyre.

Preferably said first annular portion has longitudinal dimension along said longitudinal axis smaller than the longitudinal dimension of the self-sealing sleeve.

Preferably the first sub-action d1) is carried out at least at a first annular portion of the self-sealing sleeve up to reaching said intermediate configuration in which only said first annular portion adheres to the radially inner crown surface of the tyre.

The preliminary adhesion of a first annular portion allows positioning the self-sealing sleeve in a symmetric manner over its entire circumference with respect to the tyre.

Preferably the second sub-action d2) comprises radially expanding, according to an axial progression starting from the first annular portion and in axial distancing therefrom up to reaching a circumferential end edge of said circumferential end edges of the self-sealing sleeve, a second annular portion of the self-sealing sleeve complementary to said first annular portion.

The progressive completion of the adhesion starting from the first annular portion allows uniformly distributing the self-sealing sleeve on the radially inner crown surface of the tyre and preventing the formation of air bubbles and/or bends which could negatively affect both the quality of the final result and possible successive actions such as the vulcanisation or a possible thermal treatment.

Preferably the first annular portion comprises a circumferential end edge of said circumferential end edges of the self-sealing sleeve and the second sub-action d2) is carried out according to an axial progression starting from the first annular portion up to reaching the other circumferential end edge of said circumferential end edges of the self-sealing sleeve.

The preliminary adhesion can advantageously occur at the circumferential end edge of the self-sealing sleeve and is completed according to an axial progression towards the other circumferential end edge along the second annular portion of the self-sealing sleeve.

Alternatively the first annular portion is arranged along the longitudinal axis of the self-sealing sleeve in an intermediate position between said circumferential end edges of the self-sealing sleeve and the second sub-action d2) is carried out according to an axial progression starting from axially opposite edges of the first annular portion and in axial distancing therefrom towards each circumferential end edge of the self-sealing sleeve.

Preferably the first annular portion is arranged along the longitudinal axis of the self-sealing sleeve in a central position between said circumferential end edges of the self-sealing sleeve and the second sub-action d2) is carried out according to a symmetric axial progression starting from axially opposite edges of the first annular portion and in axial distancing therefrom towards each circumferential end edge of the self-sealing sleeve.

In this case, the second annular portion of the self-sealing sleeve is given by the assembly of two annular end portions, preferably identical, each of such ends at a circumferential end edge of the self-sealing sleeve so that the preliminary adhesion advantageously occurs at an intermediate zone, preferably central, of the self-sealing sleeve and is completed according to a symmetric axial progression towards the circumferential end edges of the self-sealing sleeve.

Preferably action d), still more preferably the first sub-action d1) and the second sub-action d2), comprises exerting, from within the self-sealing sleeve, a first thrust action at a plurality of first circumferential sectors of the self-sealing sleeve, each first circumferential sector having a circumferential dimension smaller than a first circumferential perimeter of the self-sealing sleeve.

Preferably the first thrust action on the plurality of first circumferential sectors is interrupted when at least said plurality of first circumferential sectors adheres to the radially inner crown surface.

By operating through circumferential sectors, it is possible to discretely distribute the thrust necessary for radially expanding the self-sealing sleeve, simplifying such action.

Preferably action d), still more preferably the first sub-action d1) and the second sub-action d2), comprises exerting, from within the self-sealing sleeve, a second thrust action at a plurality of second circumferential sectors of the self-sealing sleeve circumferentially alternating with said first circumferential sectors up to reaching the expanded configuration of the self-sealing sleeve.

By dividing the thrust action into two or more moments operating through circumferential sectors, it is possible to obtain a uniform adhesion according to specifications.

Preferably said first thrust action is exerted at primary portions of said first circumferential sectors belonging to a first annular portion of the self-sealing sleeve and subsequently, according to an axial progression starting from the first annular portion and in axial distancing therefrom, at secondary portions of said first circumferential sectors belonging to a second portion of the self-sealing sleeve.

Also by exerting a first thrust action at first circumferential sectors, it is possible to divide the radial expansion and hence the adhesion into two or more moments in order to obtain, discretely around the longitudinal axis, a facilitated and precise preliminary adhesion and a subsequent completion of the adhesion that is gradual and controlled.

Preferably said second thrust action is exerted at primary portions of said second circumferential sectors belonging to a first annular portion of the self-sealing sleeve and subsequently, according to an axial progression starting from the first annular portion and in axial distancing therefrom, at secondary portions of said second circumferential sectors belonging to a second annular portion of the self-sealing sleeve.

Also by exerting a second thrust action at second circumferential sectors, it is possible to divide the radial expansion and hence the adhesion into two or more moments in order to obtain, uniformly around the longitudinal axis, a facilitated and precise preliminary adhesion and a subsequent completion of the adhesion that is gradual and controlled.

Preferably action b) comprises arranging the self-sealing sleeve associated with a support having cylindrical shape around a longitudinal axis thereof.

Preferably a radially inner surface of the self-sealing sleeve is in abutment against a radially outer surface of said support.

Preferably said support has a diameter smaller than the diameter of the annular anchoring portions of the tyre and is radially expandable.

Preferably the self-sealing sleeve is coaxial with the support.

The use of the support allows ensuring the correct arrangement and/or deposition of the self-sealing sleeve according to a cylindrical shape.

Preferably action c) comprises relatively moving said tyre and said support associated with said self-sealing sleeve up to arranging said self-sealing sleeve within the tyre.

Preferably relatively moving said tyre and said support comprises associating said support with a handling device, still more preferably with an anthropomorphic robot with at least six movement axes.

The support constitutes the interface between the self-sealing sleeve and the rest of the plant in order to simplify all the actions to be completed on the self-sealing sleeve itself.

Preferably action d) comprises radially expanding said support within the self-sealing sleeve up to reaching the expanded configuration of the self-sealing sleeve corresponding to an expanded configuration of the support.

The use of a support within the self-sealing sleeve allows simplifying the radial expansion of the self-sealing sleeve itself and obtaining the uniformity thereof around the longitudinal axis. Preferably action d) comprises a first sub-action d1) comprising partially expanding said support, up to reaching an intermediate configuration of the support and of the self-sealing sleeve in which the self-sealing sleeve partially adheres to the radially inner crown surface.

Preferably action d) comprises, following the first sub-action d1), a second sub-action d2) comprising completing the radial expansion of the support up to reaching said expanded configuration of the support and of the self-sealing sleeve.

The radial expansion divided into at least two separate moments allows obtaining a high precision in the relative positioning between the self-sealing sleeve and the tyre with the first sub-action and optimising the adhesion, e.g. allowing the operation so as to eliminate possible air bubbles and/or prevent bending, with the second sub-action.

Preferably the first sub-action d1) comprises radially expanding a primary circumferential portion of the support having longitudinal dimension along the longitudinal axis thereof smaller than the longitudinal dimension of the self-sealing sleeve and corresponding to a first annular portion of the self-sealing sleeve, up to reaching said intermediate configuration in which the self-sealing sleeve adheres to the radially inner crown surface at said first annular portion and preferably only at the first annular portion.

Preferably the second sub-action d2) comprises radially expanding, according to an axial progression starting from the primary circumferential portion of the support and in axial distancing therefrom, a secondary circumferential portion of the support corresponding at least to a second annular portion of the self-sealing sleeve complementary to said first annular portion.

Preferably a circumferential end edge of said circumferential end edges of the self-sealing sleeve is arranged at the primary circumferential portion of the support and the second sub-action d2) is carried out according to an axial progression starting from the primary circumferential portion towards the other circumferential end edge of said circumferential end edges of the self-sealing sleeve.

Alternatively the primary circumferential portion of the support is arranged along the longitudinal axis of the self-sealing sleeve in an intermediate position between said circumferential end edges of the self-sealing sleeve and the second sub-action d2) is carried out according to an axial progression starting from axially opposite edges of the primary circumferential portion of the support and in axial distancing therefrom towards each of said circumferential end edges of the self-sealing sleeve.

Preferably the primary circumferential portion of the support is arranged along the longitudinal axis of the self-sealing sleeve in a central position between said circumferential end edges of the self-sealing sleeve and the second sub-action d2) is carried out according to a symmetric axial progression starting from axially opposite edges of the primary circumferential portion of the support and in axial distancing therefrom towards each of said circumferential end edges of the self-sealing sleeve.

Preferably action d), still more preferably the first sub-action d1) and the second sub-action d2), comprises a first radial expansion of a plurality of circumferential sectors of the support at first circumferential sectors of the self-sealing sleeve. Each circumferential sector of the support has a circumferential dimension smaller than a circumferential dimension of the support.

By operating through circumferential sectors, it is possible to discretely distribute the thrust necessary for radially expanding the self-sealing sleeve by means of a support that is structurally and operatively effective.

Preferably action d), still more preferably the first sub-action d1) and the second sub-action d2), comprises radially contracting said circumferential sectors of the support, releasing the self-sealing sleeve at least partially adhering to the radially inner crown surface at said first circumferential sectors of the self-sealing sleeve.

Preferably action d), still more preferably the first sub-action d1) and the second sub-action d2), comprises in time succession:
a relative rotation between the contracted support and the self-sealing sleeve partially adhering to the radially inner crown surface in order to modify the angular position of the circumferential sectors of the support with respect to the self-sealing sleeve and carry them to second circumferential sectors of the self-sealing sleeve, circumferentially alternating with the first circumferential sectors of the self-sealing sleeve,
a subsequent radial expansion of said circumferential sectors of the support at the second circumferential sectors of the self-sealing sleeve;
a subsequent radial contraction of the circumferential sectors of the support, releasing the self-sealing sleeve at least partially adhering to the radially inner crown surface.

Preferably the relative rotation between the contracted support and the self-sealing sleeve partially adhering to the radially inner crown surface, the subsequent radial expansion of said circumferential sectors and the subsequent radial contraction of said circumferential sectors are repeated one or more times as a function of the circumferential dimension of the circumferential sectors of the support up to reaching the expanded configuration of the self-sealing sleeve.

Preferably the radially outer profile of said circumferential sectors of the support is modified during the first radial expansion and/or the subsequent radial expansion(s) of the circumferential sectors themselves.

Preferably, modifying the radially outer profile of said circumferential sectors comprises radially expanding first sub-sectors of said circumferential sectors belonging to a primary circumferential portion of the support and subsequently, according to an axial progression starting from the primary circumferential portion of the support and in axial distancing therefrom, expanding second sub-sectors of said circumferential sectors belonging to a secondary circumferential portion of the support.

Preferably said support is radially contracted up to a diameter smaller than the diameter of the annular anchoring portions of the tyre and extracted from the tyre, releasing the self-sealing sleeve in the expanded configuration adhering to the radially inner crown surface.

Preferably action b) comprises circumferentially depositing, on the support, a pre-assembled semi-finished product of the self-sealing sleeve having length suited to make said self-sealing sleeve.

The use of a pre-assembled semi-finished product allows optimising the materials known as self-sealing, ensuring the outcome in term of handling, adhesiveness and anti-puncture performances.

Preferably action b) comprises superimposing opposite end flaps of the pre-assembled semi-finished product and generating a joint that is extended between the circumferential end edges of the self-sealing sleeve. Still more preferably said joint is arranged parallel to the longitudinal axis of the self-sealing sleeve.

Preferably said opposite end flaps of the pre-assembled semi-finished product are mutually joined at the joint by means of an adhesive tape.

Preferably action d) comprises radially expanding a plurality of circumferential sectors of the support. Said opposite end flaps of the pre-assembled semi-finished product are superimposed at a circumferential sector of the support.

The arrangement of the joint and possibly of the adhesive tape at a circumferential sector of the support allows limiting the circumferential tensions on the joint itself during radial expansion.

Preferably the process comprises an action of rolling or pressing the joint.

Preferably the process comprises removing a radially outer protective layer of the pre-assembled semi-finished product before action d).

The use of the pre-assembled semi-finished product allows ensuring the perfect adhesiveness thereof by means of radially outer protective layers which perform the further function of facilitating the unrolling of the radially outer protective layer from the reel.

Preferably action b) comprises circumferentially depositing single components of the self-sealing sleeve on the support.

The attainment of the self-sealing sleeve starting from the single components allows selecting the materials as a function of the product specifications, still respecting the cycle times.

Preferably said single components are extruded directly on the support. Alternatively said single components are drawn from the reel and circumferentially deposited on the support.

Preferably said single components are coiled up to obtaining the axial length of the self-sealing sleeve.

Preferably action b) comprises circumferentially depositing two side edges on the support, arranging them on the support at a distance along the longitudinal axis equal to the longitudinal dimension of the self-sealing sleeve. Still more preferably said side edges are extruded directly on the support.

Alternatively said side edges are drawn from the reel and circumferentially deposited on the support.

The side edges delimit and contain the sealing material both in the subsequent handling and radial expansion and, once the self-sealing sleeve has been associated with the tyre, during the vulcanisation or possible subsequent thermal treatments.

Preferably action b) comprises circumferentially depositing a radially inner protective film on the support. Still more preferably said radially inner protective film is drawn from the reel and circumferentially deposited on the support. If said radially inner protective film has width equal to or greater than the axial length of the self-sealing sleeve, said radially inner protective film is circumferentially wound and joined on the support. If said radially inner protective film has width smaller than the axial length of the self-sealing sleeve, said radially inner protective film is coiled until covering at least the axial width of the self-sealing sleeve.

The radially inner protective film protects the support by allowing the separation of the self-sealing sleeve at the time of its radial expansion and, once the self-sealing sleeve is associated with the tyre, it ensures the maintenance of the structural and aesthetic characteristics thereof.

Preferably action b) comprises circumferentially depositing a layer of self-sealing material on the radially inner protective film. Still more preferably the layer of self-sealing material is extruded directly on the support and coiled between said side edges.

The self-sealing material can be selected based only on the specifications of adhesiveness and anti-puncture capacity.

Preferably said support is a drum comprising circumferential sectors that are radially expandable and with variable profile.

Preferably action a) comprises arranging a green tyre. Still more preferably it is provided to vulcanise and mould said green tyre comprising the self-sealing sleeve adhering to the radially inner crown surface.

Preferably action a) comprises arranging a vulcanised tyre. Still more preferably it is provided to carry out a control of the state of cleanliness of the radially inner crown surface of the vulcanised tyre before carrying out action d) and/or cleaning the radially inner crown surface of the vulcanised tyre before carrying out action d).

Preferably said vulcanised tyre comprising the self-sealing sleeve adhering to the radially inner crown surface is subjected to a further thermal treatment adapted to consolidate the adhesion between the self-sealing sleeve and the radially inner crown surface of the vulcanised tyre.

Further characteristics and advantages will be more evident from the following description of a process for manufacturing self-sealing tyres given as a non-limiting example with reference to the enclosed figures, in which:
- figure 1 is a radial semi-section schematic view of a self-sealing tyre;
- figure 2 is a schematic representation of the flow diagram of a process for manufacturing self-sealing tyres according to a first embodiment;
- figure 3 is a schematic representation of the flow diagram of a process for manufacturing self-sealing tyres according to a second embodiment;
- figure 4a is a radial semi-section schematic view of a self-sealing sleeve associated with a relative support;
- figure 4b is an axial section schematic view of a self-sealing sleeve associated with a relative support;
- figure 4c is a side schematic view of a self-sealing sleeve during deposition on a relative support;
- figures 5a-5e are schematic views of an assembly comprising a tyre and by a self-sealing sleeve according to a sequence of actions of a process for manufacturing self-sealing tyres;
- figure 6a is a sectional schematic view according to an axial middle line plane of the tyre of the assembly of figure 5b and figure 6b is a sectional schematic view according to an axial middle line plane of the tyre of the assembly of figure 5d.

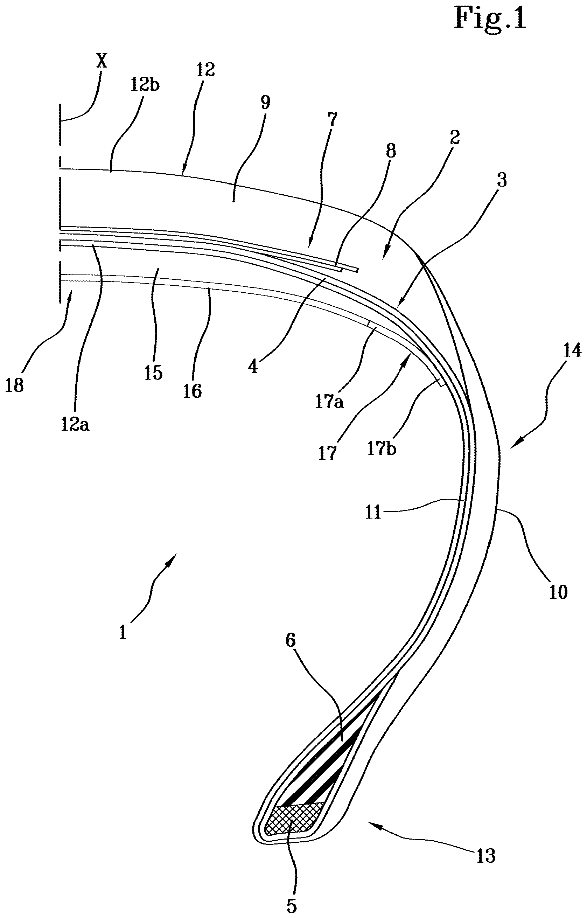

With reference to figure 1, reference number 1 overall indicates a self-sealing tyre obtained starting from a tyre 2 which, as will be subsequently described, can be a green tyre or a vulcanised tyre.

In accordance with one possible embodiment, the tyre 2 comprises a carcass structure 3 comprising at least one carcass ply 4.

The carcass ply 4 has respectively opposite end flaps engaged with respective bead cores 5. Each bead core may be associated with a filler insert 6 arranged in radially outer position with respect to the bead core.

The carcass ply 4 comprises a plurality of textile or metallic reinforcement cords arranged parallel to each other and at least partially covered by an elastomeric material layer.

The carcass structure 3 is associated with a belt structure 7 comprising one or more belt layers 8, situated in radial superimposition with respect to each other and with respect to the carcass ply 4.

Said at least one belt layer 8 has reinforcement cords, typically metallic, which can have cross orientation with respect to the circumferential extension direction of the tyre 2. The belt structure 7 can further comprise at least one radially outer layer also defined zero-degree layer which comprises cords arranged according a substantially zero angle with respect to the circumferential extension direction of the tyre.

In radially outer position with respect to the belt structure 7, a tread band 9 made of elastomeric material is applied, like other constituent components of the tyre 2.

Respective sidewalls 10 made of elastomeric material are also applied in axially outer position on the side surfaces of the carcass structure 3, each extending from one of the side edges of the tread band 9 up to the bead cores 5.

A radially inner surface of the tyre 2 can also be internally coated with a layer of elastomeric material that is substantially impermeable to air, or so-called liner 11.

The tyre 2 can comprise further components and/or have different shape with respect to that illustrated in figure 1, as a function of the vehicle type and/or of the use conditions for which it is intended.

Independent of the components and/or of the shape, the tyre 2 comprises a crown portion 12 arranged substantially perpendicular to an axial middle line plane "X" of the tyre, in a radially outer zone of the tyre itself.

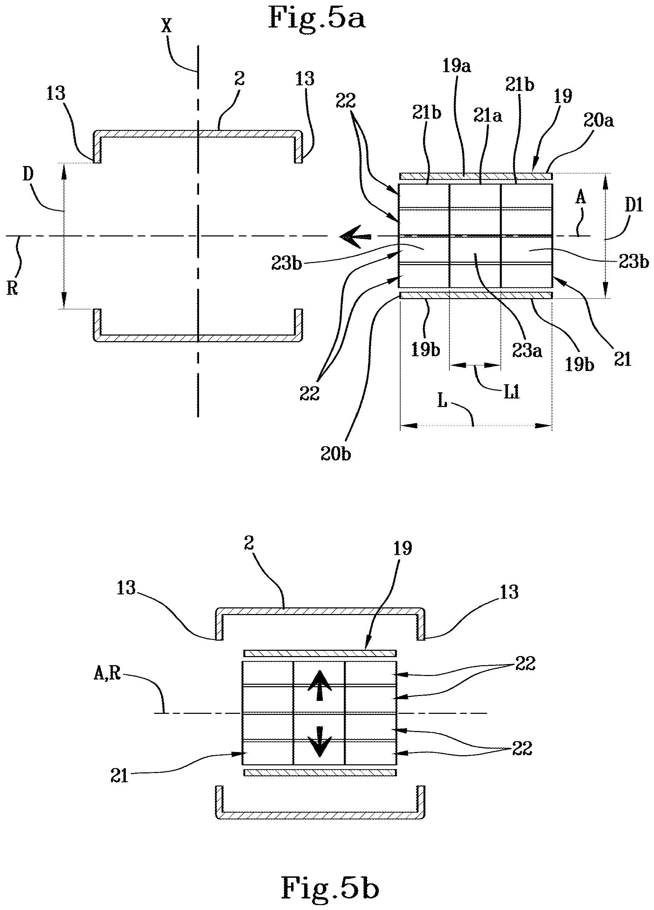

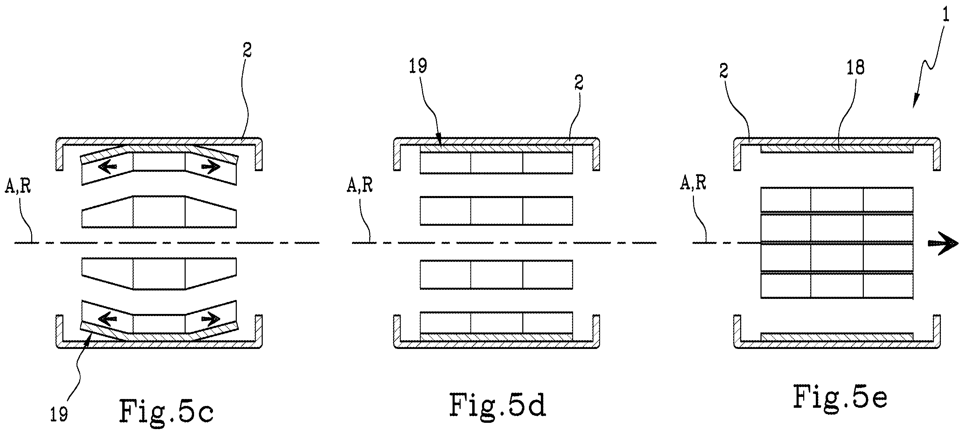

The axial middle line plane "X" of the tyre 2 is perpendicular to a rotation axis "R" of the tyre itself illustrated as a non-limiting example in figure 5a.

The crown portion 12 corresponds at least to portions of the carcass structure 3 arranged radially inner with respect to the tread band 9 of the tyre 2. Preferably, the crown portion 12 also comprises the tread band 9 and the belt structure 7 which are radially outer with respect to said carcass structure 3.

The crown portion 12 is radially extended between a radially inner crown surface 12a which corresponds to a radially inner surface of the tyre 2, e.g. of the liner 11, and a radially outer crown surface 12b which corresponds to a radially outer surface of the tyre 2 and which for example comprises the radially outer surface of the tread band 9.

The tyre 2 also comprises two annular anchoring portions 13, or beads, arranged radially inner and respectively on opposite sides of the axial middle line plane "X".

Each annular anchoring portion 13 corresponds with the zone of the tyre 2 configured in a manner so as to be engaged with its mounting rim and it is defined by the end flap of the carcass ply 4 turned up around the bead core 5 and possibly around the filler insert 6.

The tyre 2 also comprises two side portions 14 which extend respectively from axially opposite sides of the axial middle line plane "X" between each of the annular anchoring portions 13 and the crown portion 12. Each side portion 14 corresponds with a sidewall 10 and with portions of the carcass structure 3 arranged in an axially inner position with respect to the sidewall 10.

The self-sealing tyre 1, regarding which figure 1 illustrates one possible embodiment, also comprises a layer of self-sealing material 15 placed in direct contact with the radially inner crown surface 12a, for example with the liner 11. The layer of self-sealing material 15 extends for the entire circumferential extension of the tyre 2.

In radially inner position with respect to the layer of self-sealing material 15 and in direct contact therewith, a radially inner protective film 16 can be arranged. The radially inner protective film 16 is preferably a transparent film, for example made of thermoplastic material such as polyamide or polyester. The radially inner protective film 16 extends, as the layer of self-sealing material 15, for the entire circumferential extension of the tyre 2.

The self-sealing tyre 2 preferably comprises two side edges 17, for example made of elastomeric material, each arranged to laterally contain the layer of self-sealing material 15 on axially opposite sides of the axial middle line plane "X".

An axially inner portion 17a of each side edge 17, i.e. proximal with respect to the axial middle line plane "X", is superimposed on the layer of self-sealing material 15 and is arranged in radially inner position with respect thereto.

An axially outer portion 17b of each side edge 17, i.e. distal with respect to the axial middle line plane "X", lies in direct contact with the radially inner crown surface 12a, for example with the liner 11.

The layer of self-sealing material 15, preferably coupled with the two side edges 17 and possibly with the radially inner protective film 16, defines a self-sealing assembly 18 of the self-sealing tyre 1. The self-sealing tyre 1 therefore comprises the tyre 2 and the self-sealing assembly 18.

In its entirety, the self-sealing assembly 18 extends for the entire circumferential extension of the tyre 2.

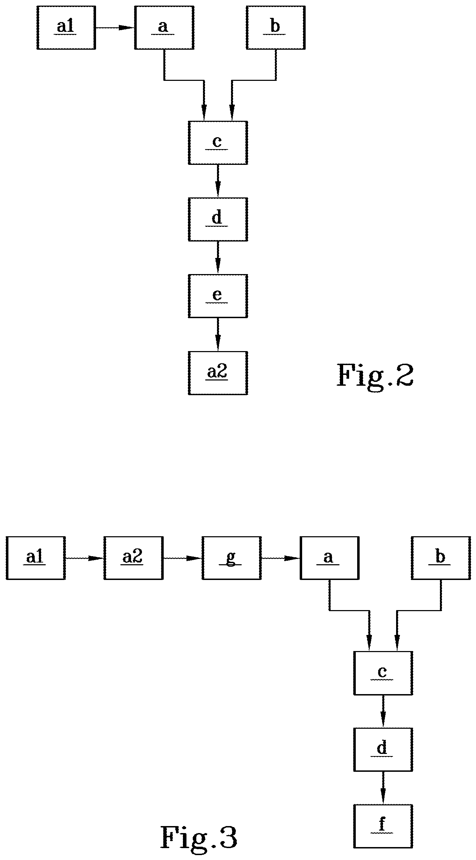

A self-sealing tyre 1, for example as described above, is obtained by means of a process for manufacturing self-sealing tyres, regarding which figure 2 and figure 3 are schematic representations of the respective flow diagrams and figures 5a-5e are schematic views of a relative sequence of actions.

Such process provides for starting from a tyre 2 suitably arranged in accordance with action a) of the process itself (figure 5a). In particular, this is a structurally complete tyre, i.e. comprising the crown portion 12, the two side portions 14 and the two annular anchoring portions 13. Each annular anchoring portion 13 has a diameter "D" (figure 5a).

Preferably, the tyre 2 is a green tyre coming from a building process a1) and not yet subjected to a process of moulding and vulcanisation a2). In this case, the process for manufacturing self-sealing tyres can be defined "Post Building" (figure 2) since the actions aimed for forming the self-sealing assembly 18 are inserted between the building process a1) and the process of moulding and vulcanisation a2).

Alternatively, the tyre 2 can be a tyre already subjected to a process of moulding and vulcanisation, i.e. a vulcanised tyre. In this case, the process for manufacturing self-sealing tyres can be defined "Post Treated" (figure 3) since the actions aimed for forming the self-sealing assembly 18 are inserted after the process of moulding and vulcanisation a2).

In both cases, the tyre 2 can come from a plant and/or from a process of building/vulcanisation that is physically and/or temporally distant. Alternatively the present process for manufacturing self-sealing tyres can represent a sequence of terminal actions of a building/vulcanisation process of a tyre 2, preferably carried out in the same plant.

In order to obtain the self-sealing assembly 18, it is provided, in accordance with an action b) of the process for manufacturing self-sealing tyres, to arrange a self-sealing sleeve 19 having cylindrical shape around a longitudinal axis "A" thereof. The self-sealing sleeve 19 is extended along the longitudinal axis "A" between two circumferential annular end edges 20a, 20b, delimiting a longitudinal dimension "L" of the self-sealing sleeve 19.

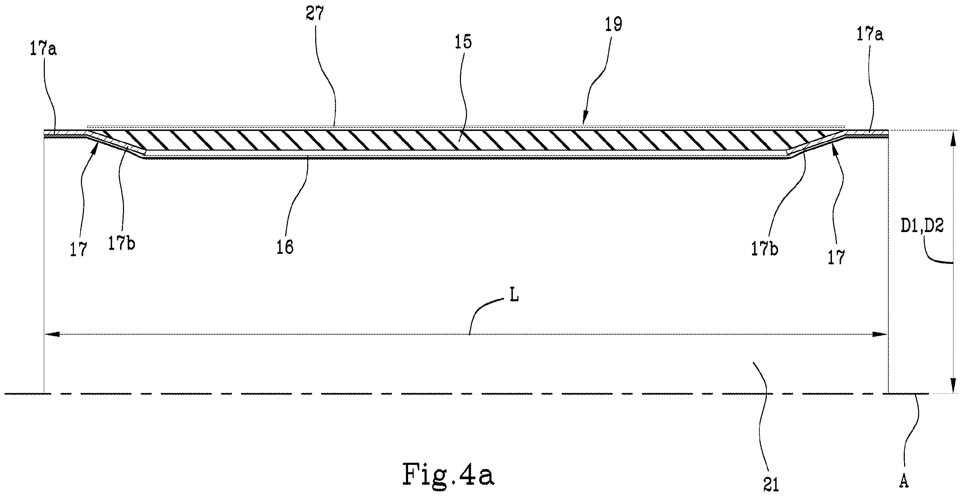

As illustrated by way of example in figures 4a-4b and 5a-5e, the self-sealing sleeve 19 is arranged associated with a support having cylindrical shape around a longitudinal axis thereof which, in the above-indicated figures, coincides with the longitudinal axis "A" of the self-sealing sleeve 19. In other words, the self-sealing sleeve 19 is arranged on the support coaxial therewith. In detail, a radially inner surface of the self-sealing sleeve 19 is in abutment against a radially outer surface of the support.

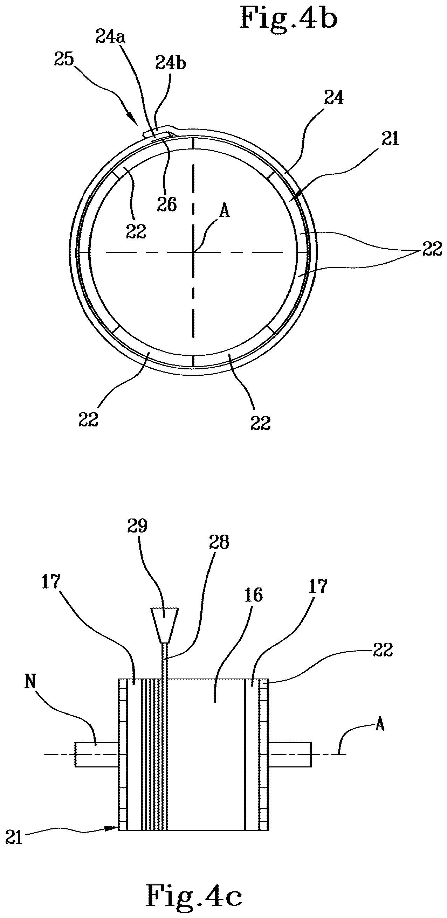

The support is a radially expandable support, preferably a drum 21 comprising circumferential sectors 22 that are radially expandable and with variable profile. Preferably the drum 21 comprises a central core "N" schematically illustrated in figure 4c and defining the longitudinal axis "A" of the drum itself. The circumferential sectors 22 are distributed around the longitudinal axis "A" and are radially movable with respect to the central core. Each circumferential sector 22 has a circumferential dimension smaller than a circumferential dimension of the drum 21.

Still more preferably, the drum 21 is divided into a primary circumferential portion 21a and a secondary circumferential portion complementary to the primary circumferential portion 21a along the longitudinal axis "A". According to the illustrated example, the primary circumferential portion 21a is a central portion of the drum 21 along the longitudinal axis "A" and the secondary circumferential portion is given by the assembly of two circumferential end portions 21b of the drum 21 arranged on axially opposite sides of the primary circumferential portion 21a. Each circumferential sector 22 comprises a first sub-sector 23a being part of the primary circumferential portion 21a and two second sub-sectors 23b arranged on axially opposite sides of the first sub-sector 23a and being part of the secondary circumferential portion of the drum 21.

The second sub-sectors 23b of each circumferential sector 22 are radially movable with respect to the respective first sub-sector 23a. In addition, the first sub-sector 23a and the second sub-sectors 23b are radially movable away from and closer to the central core "N".

Hereinbelow, reference will be made to the drum 21 comprising circumferential sectors 22 that are radially expandable and with variable profile without losing generality with reference to the support.

Action b) of arranging the self-sealing sleeve associated with the drum 21 preferably provides for making the self-sealing sleeve directly on the drum itself.

As for example illustrated in figure 4b, it is possible to circumferentially deposit on the drum 21 a pre-assembled semi-finished product 24 of the self-sealing sleeve 19. The pre-assembled semi-finished product 24 is made by means of a segment that is extended for a length suited to make the self-sealing sleeve itself between opposite end flaps 24a, 24b. In particular the length of the pre-assembled semi-finished product 24 is such to allow circumferentially winding it around the drum 21 until the end flaps 24a, 24b are superimposed, preferably at a circumferential sector 22 of the drum 21. The superimposition of the end flaps 24a, 24b generates a joint 25 which is extended between the circumferential end edges 20a, 20b of the self-sealing sleeve 19, preferably parallel to the longitudinal axis "A" of the self-sealing sleeve itself.

In order to maintain the end flaps 24a, 24b of the pre-assembled semi-finished product 24 mutually joined, it can be provided to apply an adhesive tape section 26 at the joint 25 and possibly to roll or press the joint itself.

The pre-assembled semi-finished product 24 comprises at least the layer of self-sealing material 15, preferably coupled with the two side edges 17 and possibly with the radially inner protective film 16. Such components can also be found in the self-sealing assembly 18 of the finished self-sealing tyre 1.

In addition, a radially outer protective layer 27 can be provided which will be removed from the pre-assembled semi-finished product 24 so to obtain the self-sealing assembly 18. The radially outer protective layer 27 is preferably attained by means of a film, for example made of polyester coated with an anti-adherent material such as silicone which lies in contact with the layer of self-sealing material 15, adapted to protect the same layer of self-sealing material 15 in particular when wound in reels.

The pre-assembled semi-finished product 24 can be drawn from the reel and suitably cut to size. In this case, the presence of the radially inner protective film 16 and possibly of the radially outer protective layer 27 allow the separation and the unwinding from the reel, dividing the coils and preventing mutual adhesion.

The use of a pre-assembled semi-finished product 24, in particular as described above, is particularly suitable in a "Post Building" process but it can also be applied in the "Post Treated" process.

As an alternative to the use of the pre-assembled semi-finished product 24, action b) of arranging the self-sealing sleeve associated with the drum 21 can provide for circumferentially depositing on the drum 21 the single components of the self-sealing sleeve 19 such as for example illustrated in figure 4c. As a function of the component to be deposited, it is possible to proceed by means of direct extrusion on the drum 21 of a suitably coiled continuous elongated element or by means of circumferential deposition on the drum 21 of the component drawn from the reel. In the latter case, the component may be subjected to a coiling action if available in a width smaller than the longitudinal dimension "L" of the self-sealing sleeve 19.

In detail, one preferably proceeds with the circumferential deposition of the two side edges 17 by arranging them on the drum 21 at a distance along the longitudinal axis "A" equal to the longitudinal dimension "L" of the self-sealing sleeve 19. The side edges can be extruded directly on the drum 21 or they can be drawn from the reel and circumferentially deposited on the drum 21.

Previously, one preferably proceeds to circumferentially deposit on the drum 21 the radially inner protective film 16 preferably by drawing it from a reel of protective tape. If the protective tape has width equal to or greater than the longitudinal dimension "L" of the self-sealing sleeve 19, such protective tape is cut to size, wound on the drum 21 and circumferentially joined. If the protective tape has width smaller than the longitudinal dimension "L" of the self-sealing sleeve 19, such protective tape is drawn from the reel and coiled on the drum 21 up to covering at least the longitudinal dimension "L" of the self-sealing sleeve 19.

On the radially inner protective film 16, the layer of self-sealing material 15 is subsequently circumferentially deposited preferably by means of extrusion and coiling of a continuous elongated element 28 from a nozzle 29. The extrusion and the coiling of the continuous elongated element 27 occurs between the side edges 17 (figure 4c).

If one proceeds by circumferentially depositing on the drum 21 the single components of the self-sealing sleeve 19, the radially outer protective layer 27 can be omitted.

At the end of the circumferential deposition of the single components, the self-sealing sleeve 19 comprises at least the layer of self-sealing material 15, preferably coupled with the two side edges 17 and possibly with the radially inner protective film 16. Such components can also be found in the self-sealing assembly 18 of the finished self-sealing tyre 1.

The direct circumferential deposition on the drum 21 of the single components of the self-sealing sleeve 19, in particular as described above, is particularly suitable in a "Post Treated" process but can also be applied in a "Post Building" process.

Figure 4a illustrates a self-sealing sleeve 19 arranged on a relative drum 21, independent of how it is made.

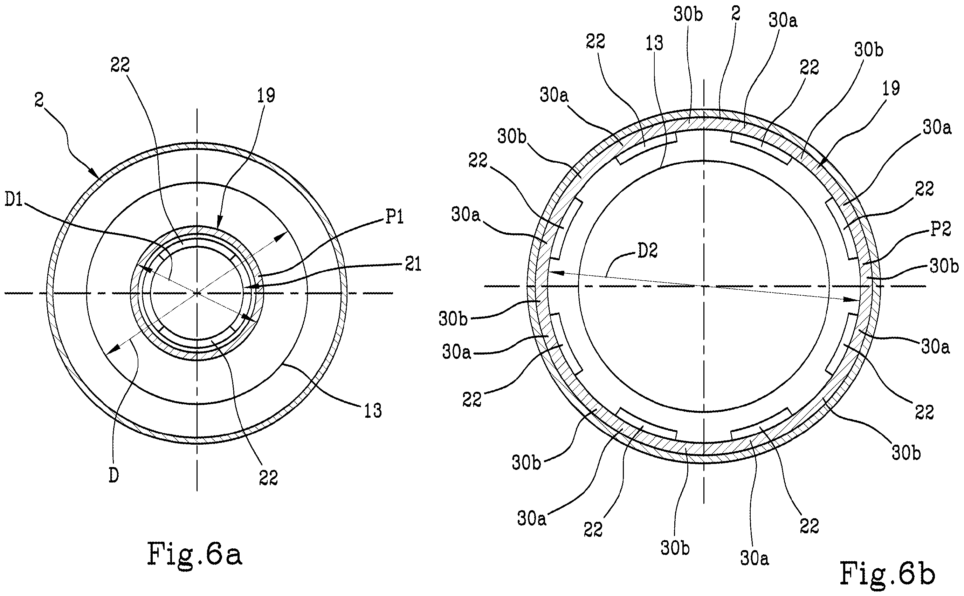

Action b) provides that the self-sealing sleeve 19 be arranged in a first configuration in which it has diameter "D1" smaller than the diameter "D" of the annular anchoring portions 13 of the tyre 2, as for example illustrated in figure 5a or 6a.

Analogously, in the same first configuration, the drum 21 has a diameter (not illustrated) smaller than the diameter "D" of the annular anchoring portions 13 of the tyre 2. Preferably the circumferential sectors 22 of the drum 21 are arranged in a configuration of minimum diameter in order to minimise, preferably eliminate, the space interposed between one circumferential sector and the adjacent one.

In addition, in the first configuration the self-sealing sleeve 19 has a first circumferential perimeter "P1" (figure 6a).

The tyre 2 and the self-sealing sleeve 19, associated with the drum 21, are moved in a relative manner in order to introduce the self-sealing sleeve 19 into the tyre 2. The relative movement between the self-sealing sleeve/drum and the tyre is carried out, in accordance with an action c) of the process for manufacturing self-sealing tyres, up to arranging the self-sealing sleeve 19 in a position coaxial with the crown portion 12 and radially inner with respect thereto (figures 5a-5b and 6a).

Preferably the relative movement of the tyre 2 and the drum 21 is attained by means of a handling device, still more preferably an anthropomorphic robot with at least six movement axes that grasps the drum 21 at an axial end.

In accordance with an action d) of the process for manufacturing self-sealing tyres, the self-sealing sleeve 19 is radially expanded within the tyre 2 due to the extensibility of the material with which the radially inner protective film 16 is made, until the self-sealing sleeve 19 reaches an expanded configuration or second configuration in which the self-sealing sleeve itself, in particular a radially outer surface thereof, adheres to the radially inner crown surface 12a of the tyre 2.

Following such radial expansion, the self-sealing sleeve 19 that has reached the expanded configuration has a second diameter "D2" greater than the first diameter "D1" and a second circumferential perimeter "P2" greater than the first circumferential perimeter "P1" (figure 6b).

The radial expansion of the self-sealing sleeve 19 is caused by the radial expansion of the drum 21, in particular of the circumferential sectors 22, within the self-sealing sleeve itself up to reaching the expanded configuration of the self-sealing sleeve 19 corresponding to an expanded configuration of the drum 21 (figures 5c-5d or figure 6b).

The radial expansion of the drum 21 and the corresponding radial expansion of the self-sealing sleeve 19 are initially carried out in a partial manner up to reaching an intermediate configuration of the drum 21 and of the self-sealing sleeve 19. In such intermediate configuration, the self-sealing sleeve 19 partially adheres to the radially inner crown surface 12a of the tyre 2. Subsequently the radial expansion of the drum 21 and of the self-sealing sleeve 19 are completed up to reaching the expanded configuration of the drum 21 and of the self-sealing sleeve 19.

In other words, action d) of the process for manufacturing self-sealing tyres comprises a first sub-action d1) of partial radial expansion of the drum 21 and of the self-sealing sleeve 19 and a second sub-action d2) of completion of the radial expansion of the drum 21 and of the self-sealing sleeve 19.

Considering the self-sealing sleeve 19, the first sub-action d1) is carried out at least at a first annular portion 19a of the self-sealing sleeve 19 which has a longitudinal dimension "L1" smaller than the longitudinal dimension "L" of the self-sealing sleeve 19. Upon reaching the intermediate configuration, the self-sealing sleeve 19 adheres to the radially inner crown surface 12a of the tyre 2 at the first annular portion 19a, preferably only at the first annular portion 19a.

Considering the drum 21, the first sub-action d1) provides for radially expanding the primary circumferential portion 21a of the drum 21. Such primary circumferential portion 21a corresponds with the first annular portion 19a of the self-sealing sleeve 19 and causes the radial expansion thereof, as described above. Therefore, the primary circumferential portion 21a has the same longitudinal dimension "L1" of the first annular portion 19a of the self-sealing sleeve 19. The radial expansion of the primary circumferential portion 21a continues up to reaching the aforesaid intermediate configuration in which the self-sealing sleeve 19 adheres to the radially inner crown surface 12a at the first (and preferably at the only) annular portion 19a.

Once again considering the self-sealing sleeve 19, the second sub-action d2) is carried out at a second annular portion of the self-sealing sleeve 19 complementary to the first annular portion 19a.

During the expansion of the first annular portion 19a, the second annular portion of the self-sealing sleeve 19 can undergo a radial expansion in particular in proximity to the first annular portion 19a and through the second sub-action d2), the second annular portion is radially expanded according to an axial progression starting from the first annular portion 19a and in axial distancing therefrom up to reaching one of the circumferential end edges 20a, 20b of the self-sealing sleeve 19.

According to the illustrated embodiments, the first annular portion 19a is arranged in an intermediate position along the longitudinal axis "A" of the self-sealing sleeve. Preferably the first annular portion 19a is arranged in a central position between the circumferential end edges 20a, 20b of the self-sealing sleeve 19. In this case, the second annular portion of the self-sealing sleeve 19 is given by the assembly of two annular end portions 19b, each of which ending at a circumferential end edge 20a, 20b of the self-sealing sleeve 19. Therefore the second sub-action d2) is carried out according to an axial progression, preferably symmetric, starting from axially opposite edges of the first annular portion 19a and in axial distancing from the first annular portion 19a towards each circumferential end edge 20a, 20b of the self-sealing sleeve 19, at each annular end portion 19b.

According to a non-illustrated embodiment, the first annular portion 19a comprises a circumferential end edge 20a of the self-sealing sleeve 19 and the second sub-action d2) is carried out according to an axial progression starting from the first annular portion 19a up to reaching the other circumferential end edge 20b of the self-sealing sleeve 19.

Once again considering the drum 21, the second sub-action d2) provides for radially expanding the secondary circumferential portion of the drum 21 complementary to the primary circumferential portion 21a. Such secondary circumferential portion of the drum 21 corresponds at least with the second annular portion of the self-sealing sleeve complementary to the first annular portion 19a and causes the radial expansion thereof, as described above. The radial expansion of the secondary circumferential portion of the drum 21 is carried out according to an axial progression, preferably symmetric, starting from the primary circumferential portion 21a of the drum 21 and in axial distancing therefrom up to completing the radial expansion of the self-sealing sleeve 19.

According to the illustrated embodiments, the primary circumferential portion 21a of the drum 21 is arranged along the longitudinal axis "A" of the self-sealing sleeve 19 in an intermediate position, preferably central, between the circumferential end edges 20a, 20b of the self-sealing sleeve 19. In this case, the secondary circumferential portion of the drum 21 is given by the assembly of the two circumferential end portions 21b, each of which supporting a circumferential end edge 20a, 20b of the self-sealing sleeve 19. Therefore the second sub-action d2) is carried out symmetrically according to an axial progression starting from axially opposite edges of the primary circumferential portion 21a of the drum 21 and in axial distancing therefrom towards each circumferential end edge 20a, 20b of the self-sealing sleeve 19.

According to a non-illustrated embodiment, a circumferential end edge 20a of the self-sealing sleeve 19 is arranged at the primary circumferential portion 21a of the drum 21 and the second sub-action d2) is carried out according to an axial progression starting from the primary circumferential portion 21a towards the other circumferential end edge 20b of the self-sealing sleeve 19.

By carrying out a first radial expansion of the circumferential sectors 22, in particular if carried out by means of the first sub-action d1) and the second sub-action d2), a first thrust action at a plurality of first circumferential sectors 30a of the self-sealing sleeve 19 is exerted within the self-sealing sleeve. Each first circumferential sector 30a of the self-sealing sleeve 19 corresponds with a circumferential sector 22 of the drum 21 and therefore has a circumferential dimension smaller than the first circumferential perimeter "P1" of the self-sealing sleeve 19. The first circumferential sectors 30a of the self-sealing sleeve 19 are circumferentially alternating with second circumferential sectors 30b of the self-sealing sleeve 19 on which the circumferential sectors 22 of the drum 21 do not operate in the course of the first radial expansion.

A subsequent radial contraction of the circumferential sectors 22 interrupts the first thrust action on the first circumferential sectors 30a and allows releasing the self-sealing sleeve 19 at least partially adhering to the radially inner crown surface 12a at the first circumferential sectors 30a of the self-sealing sleeve itself.

In order to facilitate the perfect adhesion between the self-sealing sleeve 19 and the tyre 2, it is possible to carry out a subsequent radial expansion of the circumferential sectors 22 after having carried out a relative rotation between the contracted drum 21 and the self-sealing sleeve 19, partially adhering to the radially inner crown surface 12a, so as to modify the angular position of the circumferential sectors 22 of the drum 21 with respect to the first circumferential sectors 30a. Preferably such relative rotation is carried out so as to bring circumferential sectors 22 at the second circumferential sectors 30b of the self-sealing sleeve 19, circumferentially alternating with the first circumferential sectors 30a of the self-sealing sleeve 19.

By carrying out the subsequent radial expansion of the circumferential sectors 22, in particular if carried out by means of the first sub-action d1) and the second sub-action d2), a second thrust action is exerted within the self-sealing sleeve at the second circumferential sectors 30b of the self-sealing sleeve 19.

As a function of the circumferential dimension of the circumferential sectors 22 and of the self-sealing sleeve 19, it is possible to repeat the relative rotation between the drum 21 and the self-sealing sleeve 19 and the subsequent radial expansion of the circumferential sectors 22 up to reaching the expanded configuration of the self-sealing sleeve 19.

Both in the first radial expansion and in the subsequent radial expansion(s) of the circumferential sectors 22, it is possible to modify the radially outer profile of the circumferential sectors themselves. In particular both in the first radial expansion and in the subsequent radial expansion(s) of the circumferential sectors 22, it is provided to radially expand the first sub-sectors 23a and subsequently, according to an axial progression starting from the primary circumferential portion 21a and in axial distancing therefrom, expand the second sub-sectors 23b.

The modification of the radially outer profile of the circumferential sectors 22 during the first radial expansion allows exerting the first thrust action at primary portions of the first circumferential sectors 30a belonging to the first annular portion 19a of the self-sealing sleeve 19 and subsequently, according to an axial progression starting from the first annular portion 19a and in axial distancing therefrom, at secondary portions of the first circumferential sectors 30a belonging to the second annular portion of the self-sealing sleeve.

The modification of the radially outer profile of the circumferential sectors 22 can also be repeated during the subsequent radial expansion(s) so as to exert the second thrust action at primary portions of the second circumferential sectors 30b belonging to the first annular portion 19a of the self-sealing sleeve 19 and subsequently, according to an axial progression starting from the first annular portion 19a and in axial distancing therefrom, at secondary portions of the second circumferential sectors 30b belonging to the second annular portion of the self-sealing sleeve 19.

Upon reaching the completely expanded configuration, the circumferential sectors 22 are radially contracted up to a diameter smaller than the diameter of the annular anchoring portions 13 of the tyre 2 and the drum 21 is extracted from the tyre 2, releasing the self-sealing sleeve 19 in the expanded configuration adhering to the radially inner crown surface 12a.

If action a) provides for arranging a green tyre 2, as for example is illustrated in figure 2, the green tyre 2 comprising the self-sealing sleeve 19 adhering to the radially inner crown surface 12a is subjected to a process of vulcanisation and moulding a2) possibly preceded by a preliminary treatment e) adapted to preserve the vulcanisation chamber and facilitate the extraction therefrom of the vulcanised tyre 2, i.e. of the self-sealing tyre 1 comprising the self-sealing assembly 18. The radially inner film 16 contributes to preserving the vulcanisation chamber and to facilitating the extraction.

If action a) provides for arranging a vulcanised tyre 2, as for example is illustrated in figure 3, the vulcanised tyre 2 comprising the self-sealing sleeve 19 adhering to the radially inner crown surface 12a is subjected to a further thermal treatment f) adapted to consolidate the adhesion between the self-sealing sleeve 19 and the radially inner crown surface 12a of the tyre 2. In addition, before carrying out action d) and preferably before carrying out action c), a preliminary action g) can be provided in which it is provided to control the state of cleanliness of the radially inner crown surface 12a of the vulcanised tyre 2 and/or to clean the radially inner crown surface 12a of the vulcanised tyre 2.

## Claims

1. Process for manufacturing self-sealing tyres, comprising:
a) arranging a tyre (2) comprising a crown portion (12) arranged circumferentially around a rotation axis (R) of the tyre (2) and two side portions (14) which extend respectively from axially opposite sides of the crown portion (12), wherein each side portion (14) ends in an annular anchoring portion (13) and wherein the crown portion (12) has a radially inner crown surface (12a),
b) arranging a self-sealing sleeve (19) having cylindrical shape around a longitudinal axis (A) thereof and having a diameter (D1) smaller than the diameter (D) of the annular anchoring portions (13) of the tyre (2), said self-sealing sleeve (19) extending along said longitudinal axis (A) between two circumferential end edges (20a, 20b) delimiting a longitudinal dimension (L) of said self-sealing sleeve (19),
c) introducing the self-sealing sleeve (19) into the tyre (2) up to arranging it in a position coaxial with the crown portion (12) and radially within it,
d) radially expanding said self-sealing sleeve (19) within the tyre (2) up to adhering to the radially inner crown surface (12a) in an expanded configuration of the self-sealing sleeve (19).

2. Process for manufacturing self-sealing tyres as claimed in claim 1, wherein in action b), the self-sealing sleeve (19) has a first circumferential perimeter (P1) and, as a result of action d), the self-sealing sleeve (19) that has reached the expanded configuration has a second circumferential perimeter (P2) greater than the first circumferential perimeter (P1).

3. Process for manufacturing self-sealing tyres as claimed in claim 1 or 2, wherein action d) comprises:
a first sub-action d1) comprising partially expanding the self-sealing sleeve (19) up to reaching an intermediate configuration in which the self-sealing sleeve (19) partially adheres to the radially inner crown surface (12a), and then
a second sub-action d2) comprising completing the radial expansion of the self-sealing sleeve (19) up to reaching said expanded configuration.

4. Process for manufacturing self-sealing tyres as claimed in claim 3, wherein the first sub-action d1) is carried out at at least a first annular portion (19a) of the self-sealing sleeve (19) up to reaching said intermediate configuration in which said first annular portion (19a) adheres to the radially inner crown surface (12a) of the tyre (2), said first annular portion (19a) having a longitudinal dimension (L1) along said longitudinal axis (A) smaller than the longitudinal dimension (L) of the self-sealing sleeve (19) and wherein the second sub-action d2) comprises radially expanding, according to an axial progression starting from the first annular portion (19a) and in axial distancing therefrom up to reaching one circumferential end edge of said circumferential end edges (20a, 20b) of the self-sealing sleeve (19), a second annular portion of the self-sealing sleeve (19) complementary to said first annular portion (19a).

5. Process for manufacturing self-sealing tyres as claimed in any one of the preceding claims, wherein action d) comprises exerting from within the self-sealing sleeve (19) a first thrust action at a plurality of first circumferential sectors (30a) of the self-sealing sleeve (19), each first circumferential sector (30a) having a circumferential dimension smaller than a first circumferential perimeter (P1) of the self-sealing sleeve (19) and wherein action d) comprises exerting from within the self-sealing sleeve a second thrust action at a plurality of second circumferential sectors (30b) of the self-sealing sleeve (19), circumferentially alternating with said first circumferential sectors (30a) up to reaching the expanded configuration of the self-sealing sleeve (19).

6. Process for manufacturing self-sealing tyres as claimed in one or more of the preceding claims, wherein action b) comprises arranging the self-sealing sleeve (19) associated with a support having a cylindrical shape around a longitudinal axis (A) thereof, wherein a radially inner surface of the self-sealing sleeve (19) rests on a radially outer surface of said support, said support having a diameter smaller than the diameter (D) of the annular anchoring portions (13) of the tyre (2) and being radially expandable.

7. Process for manufacturing self-sealing tyres as claimed in claim 6, wherein action c) comprises relatively moving said tyre (2) and said support associated to said self-sealing sleeve (19), up to arranging said self-sealing sleeve (19) within the tyre (2).

8. Process for manufacturing self-sealing tyres as claimed in claim 7, wherein action d) comprises radially expanding said support within the self-sealing sleeve (19) up to reaching the expanded configuration of the self-sealing sleeve (19) corresponding to an expanded configuration of the support.

9. Process for manufacturing self-sealing tyres as claimed in claim 8, wherein action d) comprises:
a first sub-action d1) comprising partially expanding said support up to reaching an intermediate configuration of the support and of the self-sealing sleeve (19) in which the self-sealing sleeve (19) partially adheres to the radially inner crown surface (12a), and then
a second sub-action d2) comprising completing the radial expansion of the support up to reaching said expanded configuration of the support and of the self-sealing sleeve (19).

10. Process for manufacturing self-sealing tyres as claimed in claim 9, wherein the first sub-action d1) comprises radially expanding a primary circumferential portion (21a) of the support having a longitudinal dimension (L1) along the longitudinal axis (A) thereof smaller than the longitudinal dimension (L) of the self-sealing sleeve (19) and corresponding to a first annular portion (19a) of the self-sealing sleeve (19), up to reaching said intermediate configuration in which the self-sealing sleeve (19) adheres to the radially inner crown surface (12a) at said first annular portion (19a).

11. Process for manufacturing self-sealing tyres as claimed in claim 10, wherein the second sub-action d2) comprises radially expanding, according to an axial progression starting from the primary circumferential portion (21a) of the support and in axial distancing therefrom, a secondary circumferential portion of the support corresponding to at least a second annular portion of the self-sealing sleeve (19) complementary to said first annular portion (19a).

12. Process for manufacturing self-sealing tyres as claimed in one or more of claims 8 to 11, wherein action d) comprises a first radial expansion of a plurality of circumferential sectors (22) of the support at first circumferential sectors (30a) of the self-sealing sleeve (19), each circumferential sector (22) of the support having a circumferential dimension smaller than a circumferential dimension of the support.

13. Process for manufacturing self-sealing tyres as claimed in claim 12, comprising modifying the radially outer profile of said circumferential sectors (22) of the support during the first radial expansion and/or the subsequent radial expansion of the circumferential sectors themselves.

14. Process for manufacturing self-sealing tyres as claimed in one or more of claims 6 to 13, wherein action b) comprises circumferentially depositing on the support a pre-assembled semi-finished product (24) of the self-sealing sleeve (19) having a length suited to make said self-sealing sleeve (19).

15. Process for manufacturing self-sealing tyres as claimed in one or more of claims 6 to 13, wherein action b) comprises circumferentially depositing on the support single components of the self-sealing sleeve (19).

## Patentansprüche

1. Verfahren zur Fertigung von selbstdichtenden Reifen, umfassend:
a) Anordnen eines Reifens (2), der einen um eine Drehachse (R) des Reifens (2) umlaufend angeordneten Zenithabschnitt (12) und zwei seitliche Abschnitte (14) umfasst, die sich von axial entgegengesetzten Seiten des Zenithabschnitts (12) erstrecken, wobei jeder seitliche Abschnitt (14) in einem ringförmigen Verankerungsabschnitt (13) endet, und wobei der Zenithabschnitt (12) eine radial innere Zenithfläche (12a) aufweist,
b) Anordnen einer selbstdichtenden Hülle (19) mit einer zylindrischen Gestalt um eine Längsachse (A) davon und mit einem Durchmesser (D1), der kleiner als der Durchmesser (D) der ringförmigen Verankerungsabschnitte (13) des Reifens (2) ist, wobei die selbstdichtende Hülle (19) sich entlang der Längsachse (A) zwischen zwei umlaufenden Endrändern (20a, 20b) erstreckt, die eine Längsdimension (L) der selbstdichtenden Hülle (19) begrenzen,
c) Einsetzen der selbstdichtenden Hülle (19) in den Reifen (2), bis er in einer Position koaxial mit dem Zenithabschnitt (12) und radial innerhalb davon angeordnet ist,
d) radiales Expandieren der selbstdichtenden Hülle (19) innerhalb des Reifens (2), bis sie an einer radial inneren Zenithfläche (12a) in einer expandierten Konfiguration der selbstdichtenden Hülle (19) zur Haftung gebracht ist.

2. Verfahren zur Fertigung von selbstdichtenden Reifen nach Anspruch 1, wobei in Vorgang b) die selbstdichtende Hülle (19) einen ersten umlaufenden Umfang (P1) aufweist, und, als Ergebnis von Vorgang d), die selbstdichtende Hülle (19), welche die expandierte Konfiguration erreicht hat, einen zweiten umlaufenden Umfang (P2) aufweist, der größer als der erste umlaufende Umfang (P1) ist.

3. Verfahren zur Fertigung von selbstdichtenden Reifen nach Anspruch 1 oder 2, wobei Vorgang d) umfasst:
einen ersten Teilvorgang d1), der das teilweise Expandieren der selbstdichtenden Hülle (19) bis zum Erreichen einer Zwischenkonfiguration umfasst, in welcher die selbstdichtende Hülle (19) teilweise an einer radial inneren Zenithfläche (12a) haftet, und anschließend
ein zweites Teilverfahren d2), umfassend das Abschließen der radialen Expansion der selbstdichtenden Hülle (19) bis zum Erreichen der expandierten Konfiguration.

4. Verfahren zur Fertigung von selbstdichtenden Reifen nach Anspruch 3, wobei der erste Teilvorgang d1) an zumindest einem ersten ringförmigen Abschnitt (19a) der selbstdichtenden Hülle (19) ausgeführt wird, bis zum Erreichen der Zwischenkonfiguration, in welcher der erste ringförmige Abschnitt (19a) teilweise an der radial inneren Zenithfläche (12a) des Reifens (2) haftet, wobei der erste ringförmige Abschnitt (19a) eine Längsdimension (L1) entlang der Längsachse (A) aufweist, die kleiner als die Längsdimension (L) der selbstdichtenden Hülle (19) ist, und wobei der zweite Teilvorgang d2) das radiale Expandieren eines zweiten ringförmigen Abschnitts der selbstdichtenden Hülle (19), die zu dem ersten ringförmigen Abschnitt (19a) komplementär ist, gemäß einer axialen Progression, die an dem ersten ringförmigen Abschnitt (19a) beginnt und sich axial davon entfernt, bis zum Erreichen eines umlaufenden Endrandes der umlaufenden Endränder (20a, 20b) der selbstdichtenden Hülle (19) umfasst.

5. Verfahren zur Fertigung von selbstdichtenden Reifen nach einem der vorhergehenden Ansprüche, wobei Vorgang d) das Ausüben einer ersten Schubwirkung von innerhalb der selbstdichtenden Hülle (19) an einer Vielzahl von ersten umlaufenden Sektoren (30a) der selbstdichtenden Hülle (19) umfasst, wobei jeder erste umlaufende Sektor (30a) eine Umfangsdimension aufweist, die geringer ist als ein erster umlaufender Umfang (P1) der selbstdichtenden Hülle (19), und wobei Vorgang d) das Ausüben einer zweiten Schubwirkung von innerhalb der selbstdichtenden Hülle an einer Vielzahl von zweiten umlaufenden Sektoren (30b) der selbstdichtenden Hülle (19) umfasst, die sich in Umfangsrichtung mit den ersten umlaufenden Sektoren (30a) abwechseln, bis zum Erreichen der expandierten Konfiguration der selbstdichtenden Hülle (19).

6. Verfahren zur Fertigung von selbstdichtenden Reifen nach einem oder mehreren der vorhergehenden Ansprüche, wobei Vorgang b) umfasst
Anordnen der selbstdichtenden Hülle (19) in Zuordnung zu einem Träger, der eine zylindrische Gestalt um eine Längsachse (A) davon aufweist,
wobei eine radial innere Oberfläche der selbstdichtenden Hülle (19) auf einer radial äußeren Oberfläche des Trägers ruht, wobei der Träger einen Durchmesser, der geringer ist als der Durchmesser (D) der ringförmigen Verankerungsabschnitte (13) des Reifens (2), aufweist und radial expandierbar ist.

7. Verfahren zur Fertigung von selbstdichtenden Reifen nach Anspruch 6, wobei Vorgang c) das relative Bewegen des Reifens (2) und des der selbstdichtenden Hülle (19) zugeordneten Trägers umfasst, bis die selbstdichtende Hülle (19) innerhalb des Reifens (2) angeordnet ist.

8. Verfahren zur Fertigung von selbstdichtenden Reifen nach Anspruch 7, wobei Vorgang d) das radiale Expandieren des Trägers innerhalb der selbstdichtenden Hülle (19) bis zum Erreichen der expandierten Konfiguration der selbstdichtenden Hülle (19) entsprechend einer expandierten Konfiguration des Trägers umfasst.

9. Verfahren zur Fertigung von selbstdichtenden Reifen nach Anspruch 8, wobei Vorgang d) umfasst:
einen ersten Teilvorgang d1), der das teilweise Expandieren des Trägers bis zum Erreichen einer Zwischenkonfiguration des Trägers und der selbstdichtenden Hülle (19) umfasst, in welcher die selbstdichtende Hülle (19) teilweise an der radial inneren Zenithfläche (12a) haftet, und anschließend
ein zweites Teilverfahren d2), umfassend das Abschließen der radialen Expansion des Trägers bis zum Erreichen der expandierten Konfiguration des Trägers und der selbstdichtenden Hülle (19).

10. Verfahren zur Fertigung von selbstdichtenden Reifen nach Anspruch 9, wobei der erste Teilvorgang d1) das radiale Expandieren eines primären Umfangsabschnitts (21a) des Trägers umfasst, der eine Längsdimension (L1) entlang der Längsachse (A) davon aufweist, die kleiner ist als die Längsdimension (L) der selbstdichtenden Hülle (19) und einem ersten ringförmigen Abschnitt (19a) der selbstdichtenden Hülle (19) entspricht, bis zum Erreichen der Zwischenkonfiguration, in welcher die selbstdichtende Hülle (19) an der radial inneren Zenithfläche (12a) an dem ersten ringförmigen Abschnitt (19a) haftet.

11. Verfahren zur Fertigung von selbstdichtenden Reifen nach Anspruch 10, wobei der zweite Teilvorgang d2) das radiale Expandieren eines sekundären Umfangsabschnitts des Trägers entsprechend zumindest einem zweiten, zu dem ersten ringförmigen Abschnitt (19a) komplementären ringförmigen Abschnitt der selbstdichtenden Hülle (19) umfasst, gemäß einer axialen Progression, die an dem ersten ringförmigen Abschnitt (21a) des Trägers beginnt und sich axial davon entfernt.

12. Verfahren zur Fertigung von selbstdichtenden Reifen nach einem oder mehreren der Ansprüche 8 bis 11, wobei Vorgang d) eine erste radiale Expansion einer Vielzahl von umlaufenden Sektoren (22) des Trägers an ersten umlaufenden Sektoren (30a) der selbstdichtenden Hülle (19) umfasst, wobei jeder umlaufende Sektor (22) des Trägers eine Umfangsdimension aufweist, die kleiner ist als eine Umfangsdimension des Trägers.

13. Verfahren zur Herstellung selbstdichtender Reifen nach Anspruch 12, umfassend das Modifizieren des radial äußeren Profils der umlaufenden Sektoren (22) des Trägers während der ersten radialen Expansion und/oder der darauffolgenden radialen Expansion der umlaufenden Sektoren selbst.

14. Verfahren zur Herstellung selbstdichtender Reifen nach einem oder mehreren der Ansprüche 6 bis 13, wobei Vorgang b) das Ablegen eines vorassemblierten halbfertigen Produkts (24) der selbstdichtenden Hülle (19), das eine Länge aufweist, die zur Herstellung der selbstdichtenden Hülle (19) geeignet ist, in Umfangsrichtung auf dem Träger umfasst.

15. Verfahren zur Herstellung selbstdichtender Reifen nach einem oder mehreren der Ansprüche 6 bis 13, wobei Vorgang b) das Ablegen einzelner Komponenten der selbstdichtenden Hülle (19) in Umfangsrichtung auf dem Träger umfasst.

## Revendications

1. Procédé de fabrication de pneus auto-obturants, comprenant :
a) l'agencement d'un pneu (2) comprenant une partie de sommet (12) agencée circonférentiellement autour d'un axe de rotation (R) du pneu (2) et deux parties latérales (14) qui s'étendent respectivement à partir de côtés axialement opposés de la partie de sommet (12), dans lequel chaque partie latérale (14) se termine par une partie d'ancrage annulaire (13) et dans lequel la partie de sommet (12) présente une surface de sommet radialement interne (12a),
b) l'agencement d'un manchon auto-obturant (19) ayant une forme cylindrique autour d'un axe longitudinal (A) de celui-ci et ayant un diamètre (D1) inférieur au diamètre (D) des parties d'ancrage annulaires (13) du pneu (2), ledit manchon auto-obturant (19) s'étendant le long dudit axe longitudinal (A) entre deux bords d'extrémité circonférentiels (20a, 20b) délimitant une dimension longitudinale (L) dudit manchon auto-obturant (19),
c) l'introduction du manchon auto-obturant (19) dans le pneu (2) jusqu'à son agencement dans une position coaxiale à la partie de sommet (12) et radialement à l'intérieur de celle-ci,
d) l'extension radiale dudit manchon auto-obturant (19) à l'intérieur du pneu (2) jusqu'à adhérer à la surface de sommet radialement interne (12a) dans une configuration étendue du manchon auto-obturant (19).

2. Procédé de fabrication de pneus auto-obturants tel que revendiqué dans la revendication 1, dans lequel dans l'action b), le manchon auto-obturant (19) a un premier périmètre circonférentiel (P1) et, suite à l'action d), le manchon auto-obturant (19) qui a atteint la configuration étendue a un deuxième périmètre circonférentiel (P2) supérieur au premier périmètre circonférentiel (P1).

3. Procédé de fabrication de pneus auto-obturants tel que revendiqué dans la revendication 1 ou 2, dans lequel l'action d) comprend :
une première sous-action d1) comprenant l'extension partielle du manchon auto-obturant (19) jusqu'à atteindre une configuration intermédiaire dans laquelle le manchon auto-obturant (19) adhère partiellement à la surface de sommet radialement interne (12a), puis
une deuxième sous-action d2) comprenant l'achèvement de l'extension radiale du manchon auto-obturant (19) jusqu'à atteindre ladite configuration étendue.

4. Procédé de fabrication de pneus auto-obturants tel que revendiqué dans la revendication 3, dans lequel la première sous-action d1) est réalisée au niveau d'au moins une première partie annulaire (19a) du manchon auto-obturant (19) jusqu'à atteindre ladite configuration intermédiaire dans laquelle ladite première partie annulaire (19a) adhère à la surface de sommet radialement interne (12a) du pneu (2), ladite première partie annulaire (19a) ayant une dimension longitudinale (L1) le long dudit axe longitudinal (A) inférieure à la dimension longitudinale (L) du manchon auto-obturant (19) et dans lequel la deuxième sous-action d2) comprend l'extension radiale, selon une progression axiale commençant à partir de la première partie annulaire (19a) et en éloignement axial de celle-ci jusqu'à atteindre un bord d'extrémité circonférentiel desdits bords d'extrémité circonférentiels (20a, 20b) du manchon auto-obturant (19), d'une deuxième partie annulaire du manchon auto-obturant (19) complémentaire de ladite première partie annulaire (19a).

5. Procédé de fabrication de pneus auto-obturants tel que revendiqué dans l'une quelconque des revendications précédentes, dans lequel l'action d) comprend l'application depuis l'intérieur du manchon auto-obturant (19) d'une première action de poussée au niveau d'une pluralité de premiers secteurs circonférentiels (30a) du manchon auto-obturant (19), chaque premier secteur circonférentiel (30a) ayant une dimension circonférentielle inférieure à un premier périmètre circonférentiel (P1) du manchon auto-obturant (19) et dans lequel l'action d) comprend l'application depuis l'intérieur du manchon auto-obturant d'une deuxième action de poussée au niveau d'une pluralité de deuxièmes secteurs circonférentiels (30b) du manchon auto-obturant (19), alternant circonférentiellement avec lesdits premiers secteurs circonférentiels (30a) jusqu'à atteindre la configuration étendue du manchon auto-obturant (19) .

6. Procédé de fabrication de pneus auto-obturants tel que revendiqué dans une ou plusieurs des revendications précédentes, dans lequel l'action b) comprend l'agencement du manchon auto-obturant (19) associé à un support ayant une forme cylindrique autour d'un axe longitudinal (A) de celui-ci, dans lequel une surface radialement interne du manchon auto-obturant (19) repose sur une surface radialement externe dudit support, ledit support ayant un diamètre inférieur au diamètre (D) des parties d'ancrage annulaires (13) du pneu (2) et étant radialement extensible.

7. Procédé de fabrication de pneus auto-obturants tel que revendiqué dans la revendication 6, dans lequel l'action c) comprend le déplacement relatif dudit pneu (2) et dudit support associé audit manchon auto-obturant (19), jusqu'à l'agencement dudit manchon auto-obturant (19) à l'intérieur du pneu (2).

8. Procédé de fabrication de pneus auto-obturants tel que revendiqué dans la revendication 7, dans lequel l'action d) comprend l'extension radiale dudit support à l'intérieur du manchon auto-obturant (19) jusqu'à atteindre la configuration étendue du manchon auto-obturant (19) correspondant à une configuration étendue du support.

9. Procédé de fabrication de pneus auto-obturants tel que revendiqué dans la revendication 8, dans lequel l'action d) comprend :
une première sous-action d1) comprenant l'extension partielle dudit support jusqu'à atteindre une configuration intermédiaire du support et du manchon auto-obturant (19) dans laquelle le manchon auto-obturant (19) adhère partiellement à la surface de sommet radialement interne (12a), puis
une deuxième sous-action d2) comprenant l'achèvement de l'extension radiale du support jusqu'à atteindre ladite configuration étendue du support et du manchon auto-obturant (19).

10. Procédé de fabrication de pneus auto-obturants tel que revendiqué dans la revendication 9, dans lequel la première sous-action d1) comprend l'extension radiale d'une partie circonférentielle primaire (21a) du support ayant une dimension longitudinale (L1) le long de l'axe longitudinal (A) de celui-ci inférieure à la dimension longitudinale (L) du manchon auto-obturant (19) et correspondant à une première partie annulaire (19a) du manchon auto-obturant (19), jusqu'à atteindre ladite configuration intermédiaire dans laquelle le manchon auto-obturant (19) adhère à la surface de sommet radialement interne (12a) au niveau de ladite première partie annulaire (19a) .

11. Procédé de fabrication de pneus auto-obturants tel que revendiqué dans la revendication 10, dans lequel la deuxième sous-action d2) comprend l'extension radiale, selon une progression axiale commençant à partir de la partie circonférentielle primaire (21a) du support et en éloignement axial de celle-ci, d'une partie circonférentielle secondaire du support correspondant à au moins une deuxième partie annulaire du manchon auto-obturant (19) complémentaire de ladite première partie annulaire (19a).

12. Procédé de fabrication de pneus auto-obturants tel que revendiqué dans une ou plusieurs des revendications 8 à 11, dans lequel l'action d) comprend une première extension radiale d'une pluralité de secteurs circonférentiels (22) du support au niveau de premiers secteurs circonférentiels (30a) du manchon auto-obturant (19), chaque secteur circonférentiel (22) du support ayant une dimension circonférentielle inférieure à une dimension circonférentielle du support.

13. Procédé de fabrication de pneus auto-obturants tel que revendiqué dans la revendication 12, comprenant la modification du profil radialement externe desdits secteurs circonférentiels (22) du support pendant la première extension radiale et/ou l'extension radiale ultérieure des secteurs circonférentiels eux-mêmes.

14. Procédé de fabrication de pneus auto-obturants tel que revendiqué dans une ou plusieurs des revendications 6 à 13, dans lequel l'action b) comprend le dépôt circonférentiel sur le support d'un produit semi-fini pré-assemblé (24) du manchon auto-obturant (19) ayant une longueur adaptée pour réaliser ledit manchon auto-obturant (19).

15. Procédé de fabrication de pneus auto-obturants tel que revendiqué dans une ou plusieurs des revendications 6 à 13, dans lequel l'action b) comprend le dépôt circonférentiel sur le support de composants uniques du manchon auto-obturant (19).
